# EUROPEAN PATENT APPLICATION

(11) **EP 0 981 966 A2**
(43) Date of publication of application: **01.03.2000**
(21) Application number: 99306072.2
(22) Date of filing: 30.07.1999
(51) Int. Cl.: A23G 3/02, A23G 1/22

(54) **Improvements in or relating to moulds**

(30) Priority: 04.08.1998 GB 9816828
(71) Applicant: Yorkshire Moulds Limited, Brighouse, West Yorkshire, HD6 1QF (GB)
(72) Inventor: Simpson, Robert, Yorkshire Moulds Limited, West Yorkshire HD6 1QF (GB)
(74) Representative: Sherrard-Smith, Hugh

(57) **Abstract**

A polymer chocolate mould has a marking applied to it by a laser burning the polymer to a depth of approximately 2.5 mm. The heat from the laser alters the colour of the polymers to leave a visible mark of where the laser has burnt. The mark can be a bar code, a date or writing for instance. The laser may expand to the region of the mould that has been burnt or subject to heat.

## Description

The present invention relates to moulds including a marking, a method of marking a mould, a method of forming a raised pattern on a mould component and a mould component with a raised pattern.

In moulds used for making chocolate the manufacturer keeps many different moulds for making a variety of different shapes or different patterns of chocolate. Consequently at any one time there are a significant number of similar moulds in stock. If the wrong mould is inadvertently used then the finished product is useless.

If ink jet printing or other printing were to be used then two problems arise. The first is that the ink will inevitably come off into the chocolate thereby spoiling the product. The second is that the surfaces of the mould touch and rub against each other and the surfaces are subject to regular vigorous washing. Consequently the markings would soon disappear.

A further problem is making injection moulds of polymer in that the tools are expensive. If a small production run is required with a personalised pattern on the mould then the unit price is prohibitively high. Furthermore, it can be difficult and time consuming to make an intricate pattern on a metal tool from which the mould is made.

It is an object of the present invention to attempt to overcome at least some of the above disadvantages.

According to one aspect of the present invention a mould including a marking is characterised in that the marking comprises an alteration in the molecular structure of the moulding.

The marking may extend into the mould beyond the surface of the mould and may extend more than 1 mm or more than 2 mm or less than 4 mm or less than 3 mm or in the region of 2.5 mm beyond the surface of the mould.

The marking may be arranged to be on a surface that in use, will be worn or rubbed.

The marking may be on the top or the side or sides of the mould or any combination thereof.

The alteration in the molecular structure may be arranged to have been effected by heat, such as by a laser.

The mould may comprise a polymer and may comprise a polycarbonate.

The mould may comprise a chocolate mould that may include a plurality of recesses for separate chocolate pieces.

According to a further aspect of the present invention a method of marking a mould is characterised in that the molecular structure of the mould is caused to undergo an alteration in order to effect the marking.

The method may comprise altering the molecular structure to a depth beyond the surface of more than 1 mm or more than 2 mm or less than 4 mm or less than 3 mm or in the region of 2.5 mm beyond the surface of the mould.

The method may comprise marking the top or the side or sides of the mould or any combination thereof.

The method may comprise altering the molecular structure by heat, such as by a laser.

The method may comprise altering the molecular structure of a polymer.

According to another aspect of the present invention a method of forming a raised pattern on a mould component is characterised in that the raised pattern is caused by heat.

The heat may be arranged to cause a change in molecular structure of the mould component or, alternatively or additionally to expand the volume of the portion that is being subjected to heat.

According to another aspect of the present invention a method of forming a raised pattern on a mould component is characterised in that the raised pattern is caused by a change in the molecular structure of the mould component.

The method may comprise changing the molecular structure of the mould component to expand the molecular structure.

The change in molecular structure may be arranged to be caused by heat.

The heat may be applied by a laser.

The mould component may comprise a polymer such as a polycarbonate.

The mould component may comprise a metal component.

The mould component may comprise a tool from which a mould is made.

The present invention also includes a mould component when made by a method as herein referred to.

The present invention includes any combination of the herein referred to features or limitations.

The present invention can be carried into practice in various ways but several embodiments will now be described by way of example, and with reference to the accompanying drawings in which:-
Figure 1 is a schematic perspective view of a first type of chocolate mould 10;
Figure 2 is a schematic perspective view of a second embodiment of a chocolate mould 24, and
Figure 3 is a schematic perspective view of part of a mould component 30.

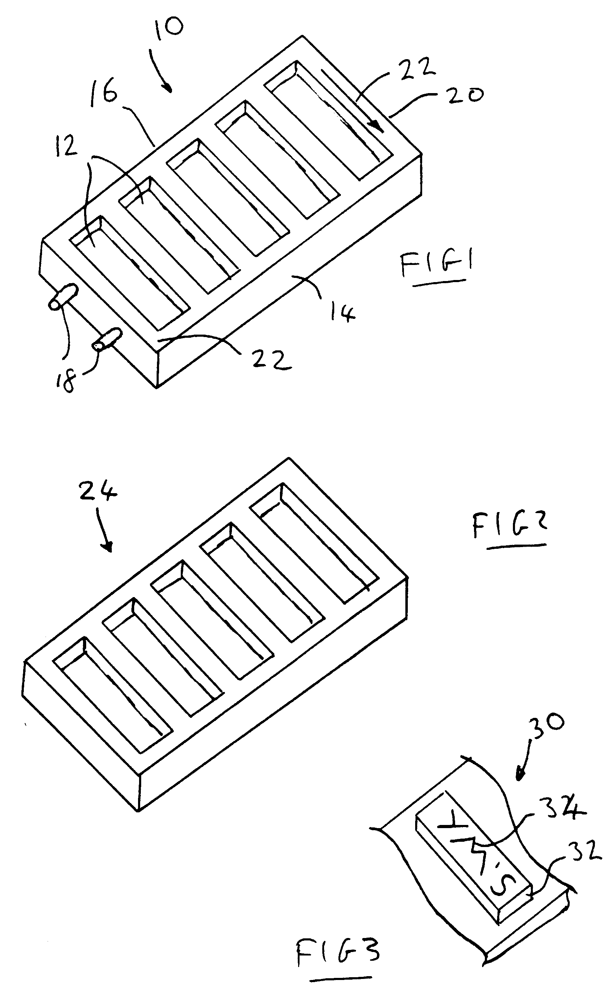

As shown in Figure 1 the mould 10 includes four recesses 12 into which chocolate in molten form is poured or injected. The chocolate is intended to take up the shape of the recesses. The bottom or sides of each recess may include patterns or writing such as logos which the exterior surface of the chocolate, once ejected from the mould, displays.

In use, a series of moulds are arranged with the front face 14 of one mould facing or abutting the rear face 16 of an adjacent mould. The moulds are driven by a chain conveyor that abuts or engages lugs 18 that project from each side face 20 of the mould. The moulds are supported from beneath and guided in a linear direction by guides and supports (not shown).

During a moulding operation the series of moulds is advanced continuously with the mould passing a chocolate filling station (not shown). Then the mould pass a scraper that removes any excess chocolate from the upper face 22 and ensures that each recess is full. Then the moulds go through a cooling station at which the path of travel of the conveyor may be in an upwards direction. After the chocolate has set the moulds are guided such that they are tipped upside down to allow the chocolate pieces to fall and then subsequently be packed.

After a moulding run each mould is removed. The moulds are cleaned periodically.

The embodiment shown in Figure 2 is used in the same process as that described in relation to Figure 1. In this embodiment though, instead of the moulds being driven by a chain conveyor they are advanced by being pushed forward in a guideway. That pushing force either comes from pushing fingers engaging one mould which mould then pushes a few moulds in advance by abutment with those moulds or by individually pushing each mould.

When a run for a particular shape of chocolate is to be made the operator has to select the correct moulds. It frequently happens that one mould will look virtually the same as another mould. Accordingly it is important that the correct mould is chosen.

The moulds are made of polymers such as polycarbonates. In order that the correct mould can be selected time and time again the moulds are marked with a laser. The laser burns the polymers to a depth of approximately 2.5 mm. In polymers, the laser alters the colour of the polymers to leave a visible mark of where the laser has burnt. Bar codes, dates and writing for instance can be marked on the moulds such that, when the moulds are stacked, at least one and possibly all of the sides are visible and the user can ensure that the correct mould is selected. In addition, the top surface of each mould can be marked with an arrow 22 by a laser to indicate the intended direction of travel of the mould on the conveyor.

When the laser burns the polymer, the molecular structure of the polymer is altered to the depth of 0.25 mm. Accordingly, even when the moulds are scraped to remove chocolate, or worn by the guides or the chain drive, or worn by abutment with each other, or worn by frequent washing, the marking remains visible until the mould has been worn away to a depth exceeding the depth of the laser burn. In practice though the moulds would be replaced before that amount of wear occurred.

The laser treatment of polymers or metals also has another effect. That is to alter the molecular structure or surface appearance to expand slightly the region that has been burnt.

In chocolate polymer moulds this feature can be used to burn a pattern into the mould to raise slightly that portion that has been burnt. When using such a mould chocolate coming from the mould includes a small indentation where the layer has burnt the mould. This feature is particularly useful in making chocolate with, for instance, a personal name appearing thereon as it is not necessary to build a special tool for the mould with that name, which would be extremely expensive. Rather a single tool can be used to make a common mould with each mould then being personalised with the use of the laser.

As shown in Figure 3, the metal tool 30 from which the moulds are made could have a pattern or writing applied to them to provide on a projecting portion 32, a slight raised surface or rib 34 to the tool in the region where a laser has passed. Then a mould made from the tool will have a recess in the region that has been treated by the laser to cause the chocolate to have a raised portion in that region.

It will be appreciated that the degree of application of the laser can be altered to vary the depth of the molecular alteration or to vary the amount by which the surface of the polymer or metal is raised by the laser.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mould (10, 24) including a marking characterised in that the marking comprises an alteration in the molecular structure of the mould.

2. A mould as claimed in Claim 1 in which the marking extends into the mould beyond the surface of the mould.

3. A mould as claimed in any preceding claim in which the alteration in the molecular structure is arranged to have been effected by heat.

4. A mould as claimed in Claim 3 in which the alteration in the molecular structure is arranged to have been effected by laser.

5. A mould as claimed in any preceding claim in which the marking is a raised pattern.

6. A mould as claimed in any preceding claim comprising a polymer.

7. A method of marking a mould (10, 24) characterised in that the molecular structure of the mould is caused to undergo an alteration in order to effect the marking.

8. A method as claimed in Claim 7 comprising altering the molecular structure to a depth beyond the surface.

9. A method as claimed in Claim 7 or 8 comprising altering the molecular structure by heat.

10. A method as claimed in any of Claims 7 to 9 in which the heat is arranged to expand the volume of the portion that is being subjected to heat.
